# EUROPEAN PATENT SPECIFICATION

(11) **EP 4 544 534 B1**
(45) Date of publication and mention of the grant of the patent: **25.02.2026**
(21) Application number: 23742408.0
(22) Date of filing: 21.06.2023
(51) Int. Cl.: G09B 23/28

(54) **SURGICAL TRAINING DEVICE**
CHIRURGISCHE TRAININGSVORRICHTUNG
DISPOSITIF D'ENTRAÎNEMENT À LA CHIRURGIE

(30) Priority: 22.06.2022 IT 202200013216
(43) Date of publication of application: 30.04.2025
(73) Proprietor: Violatech S.R.L., 00144 Roma (IT)
(72) Inventor: MARITATI, Gabriele, 00153 Roma (IT)
(74) Representative: Crippa, Paolo Ernesto
(86) International application number: PCT/IB2023/056408
(87) International publication number: WO 2023/248149

(56) References cited:
- WO-A1-2015/105530
- GB-A- 2 252 656
- GB-A- 2 315 905

## Description

The present invention relates to a surgical training device, more specifically to a training device for a surgical procedure of endovascular treatment of aneurysms.

The invention also relates to a training method for the aforementioned surgical procedure of endovascular treatment of aneurysms in which said device is used, as well as to the use of the device in said training method.

Aneurysms are permanent pathological dilations affecting the wall of blood vessels, usually arterial vessels. The occurrence of an aneurysm is often related to hypertension, dyslipidemia, age, smoking, or hereditary predisposition.

The dilated section of the wall is weakened and may continue to dilate over time under the effect of blood pressure until it ruptures, leading to haemorrhages that are often fatal to the patient. Even when it does not rupture, a large aneurysm can impede proper blood circulation and encourage the formation of thrombi that can embolize resulting in ischaemia of downstream tissues.

Aneurysms most frequently affect the aorta, the largest vessel in the cardiovascular system. In most cases, aneurysms are located in the sub-renal abdominal aortic district, upstream of the iliac bifurcation.

Aneurysms can be either treated by traditional open surgery or by an endovascular procedure, which is now considered the treatment of choice in most cases due to its very low invasiveness for the patient and the high reproducibility of the surgical technique.

Document GB 2 315 905 discloses a model for simulated abdominal aneurysm operations including transparent repair site model having an inlet and outlets representing arteries carrying a pulsed flow of fluid, a graft insertion connection and monitoring equipment.

Endovascular treatment of aneurysms involves grafting at the aneurysmal portion of the vessel a tubular endoprosthesis having a length and shape that excludes the dilated vascular region from the circulation. The endoprosthesis is introduced into the circulatory system through a very small percutaneous access made in a peripheral body region -for example in the groin area- and is run up to the aneurysmal vessel by means of guides and catheters, as will be detailed below.

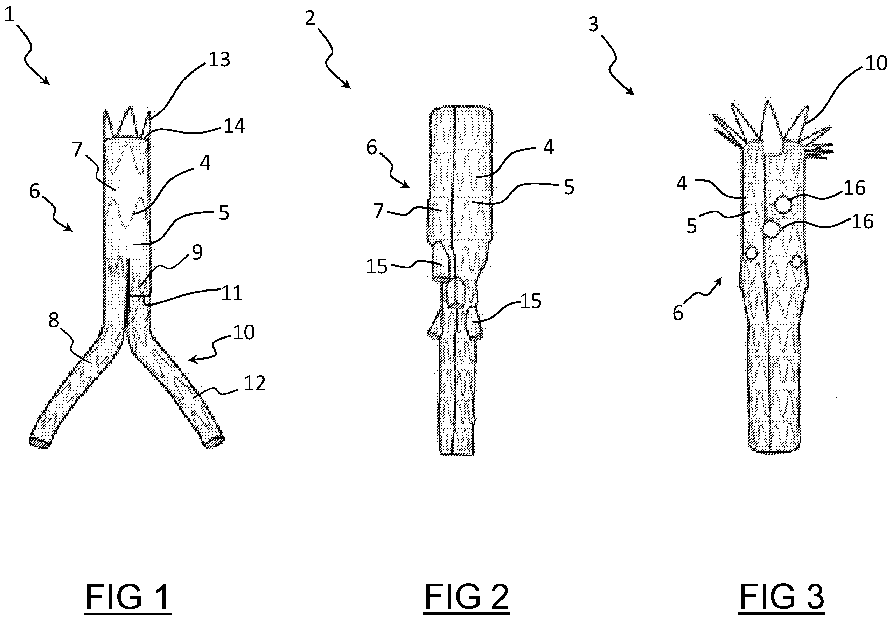

Figures 1, 2 and 3 schematically illustrate some of the types of tubular endoprostheses commonly used in endovascular procedures, indicated with 1, 2 and 3.

Endoprostheses 1, 2 and 3 consist of metallic stents 4, generally made of steel or shape memory alloy, coated with an impermeable material 5 such as GoreTex or polyethylene terephthalate (PTFE), possibly in woven form (Dacron).

Endoprosthesis 1 is of the bifurcated multimodular type, suitable for placement at sub-renal aortic aneurysms, upstream of the iliac bifurcation.

Endoprosthesis 1 comprises a main module 6, including a central body 7, configured for placement in the sub-renal aortic segment, a lateral leg 8, configured for placement in the lateral iliac artery, and a contralateral portion 9 that is shorter than the lateral leg 8 and configured to remain floating within the aneurysm (until its subsequent union with the contralateral module 10, see below) without contacting the walls of the contralateral iliac artery.

Endoprosthesis 1 also comprises a contralateral module 10 distinct from the main module 6. The contralateral module 10 is attached to the contralateral portion 9 at its terminal opening 11, also referred to as gate 11, to form the contralateral leg 12 configured for placement in the contralateral iliac artery, to result in the complete exclusion of the aneurysm from the circulation.

Free stents 13 are provided at the proximal end 14 of the main module 6 of the endoprosthesis 1, the function of which is to improve anchoring of the endoprosthesis 1 to the aortic wall without occluding the origin of aortic branches.

Endoprosthesis 2 is of the branched monomodular type, and comprises a single main module 6 comprising a central body 7, configured for insertion into an aorta, provided with branches 15 (two shown in FIG. 2) configured to facilitate the introduction of covered stents into vessels originating from the aneurysmal sac.

Endoprosthesis 3 is of the monomodular fenestrated type. It consists of a single main module 6 in which fenestrations 16 (two shown in FIG. 3) are made to allow the perfusion of collateral vessels. According to specific requirements, in almost all cases additional modules are provided in the form of lateral legs (not shown herein) to be grafted into the collateral vessels originating at the fenestrations 16.

As mentioned above, endoprosthesis 1 is suitable for the treatment of abdominal aneurysms and is generally made in standard sizes.

Endoprosthesis 2 is, for example, particularly suitable for the treatment of aneurysms located in the thoracoabdominal district of the aorta, and is usually custom-designed according to the patient's needs.

Endoprosthesis 3 is generally used in the treatment of aneurysms with special problems, e.g. aneurysms with an insufficient subrenal aortic collar, and for certain types of thoracoabdominal aneurysms. Endoprosthesis 3 can be manufactured in standard sizes or custom-designed.

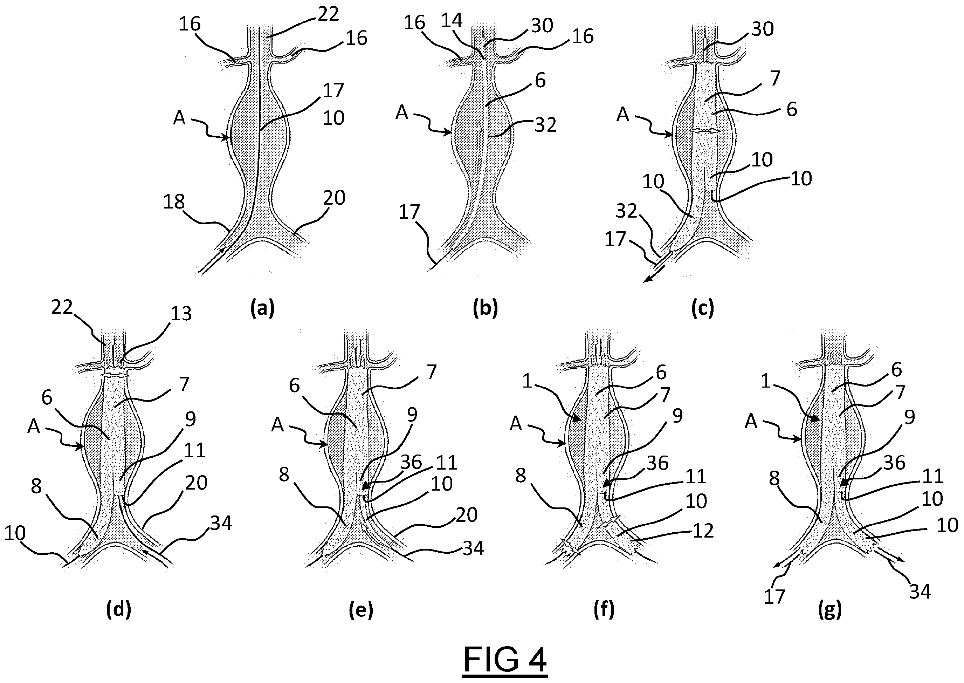

In order to better understand how vascular endoprostheses are inserted, FIG. 4 illustrates in a completely schematic manner some basic steps of an endovascular aneurysm repair (EVAR) surgical procedure.

The EVAR procedure exemplarily illustrated herein is intended for grafting the bifurcated endoprosthesis 1 (FIG. 1) at a subrenal abdominal aneurysm, indicated by the reference A in FIG. 4, located in the aortic district between the renal arteries 16 and the bifurcation of the aorta into the lateral iliac artery 18 and the contralateral iliac artery 20.

The EVAR procedure starts with the creation of a first peripheral arterial access at a common femoral artery (not visible herein), which will conventionally be referred to as the lateral common femoral artery, and with the introduction of a first guidewire 17 into this first access, which is advanced through the lateral common femoral artery, the lateral iliac artery 18 and the aneurysm A to the supra-renal aortic region 22 (step (a) in FIG. 4).

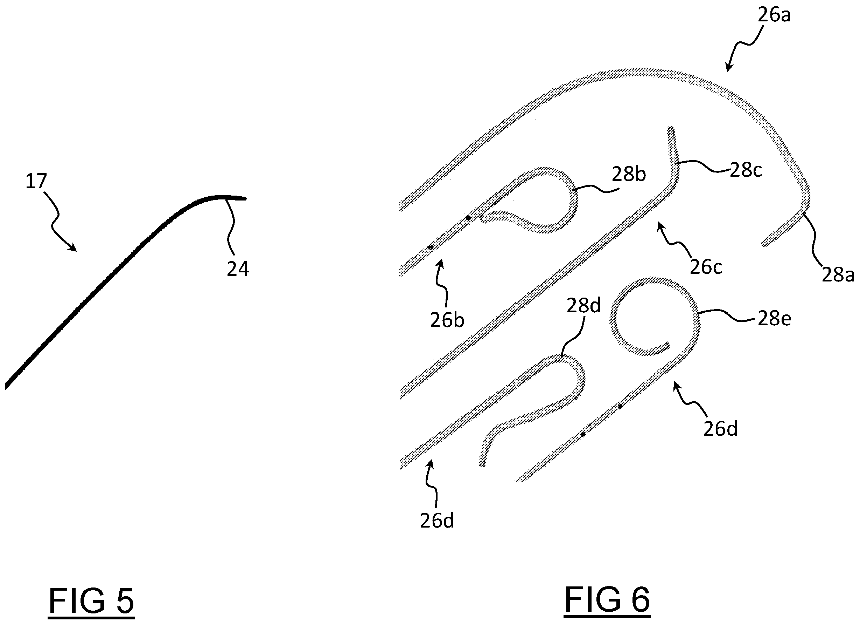

The first guidewire 17 used, best illustrated in FIG. 5, is thin, flexible and hydrophilic, having a curved end 24 that facilitates correct routing during insertion.

Guidewires having different thickness and stiffness are commercially available, and selected on a case-by-case basis according to the requirements of the specific procedure.

Since the route of introduction from the peripheral access to aneurysm A may also be quite convoluted, the first guidewire 17 is advanced with the help of one or more guiding catheters of different shapes.

FIG. 6 illustrates by way of example some guiding catheters 26a, 26b, 26c, 26d and 26e which may be employed for this purpose. The guiding catheters illustrated herein have respective endings 28a, 28b, 28c, 28d and 28e of varied shapes which, by cooperating with the first guidewire 17 running in their inner lumen, direct and orient the end 24 thereof in a particular direction. During the insertion procedure, depending on the anatomical configuration and on where the first guidewire 17 is located in its advancement, the guiding catheter having the most suitable ending to direct the guidewire in the desired direction is selected from time to time. For example, guidewires with a diameter of approximately 1 mm can be used in cooperation with catheters with a diameter of 3-4 mm.

The procedure involves the sequential use of one or more intermediate, low-stiffness first guidewires, which are finally replaced by a more rigid first definitive guidewire, which acts as a sliding track for the components that must subsequently reach aneurysm A. For convenience, the same expression "first guidewire 17"will be used to designate both the first intermediate guidewires and the first definitive guidewire.

In following step (b) of the procedure schematized in FIG. 4, the main module 6 (FIG. 1) of the endoprosthesis 1, attached to a first release catheter 30 and held in a compacted form by a first sheath 32, is advanced along the first guidewire 17 until the proximal end 14 of the main module 6 is below the renal arteries 16.

The first sheath 32 is then withdrawn, and the central body 7, the lateral leg 8 and the contralateral portion 9 of the main module 6 of the endoprosthesis 1 automatically expand under the radial force of the stents 4 (FIG. 1) that form the endoprosthesis 1 and adhere to the vessel walls. In order to improve adhesion and sealing, expansion is generally promoted by inflating an advanced balloon up to the endoprosthesis 1 on the first guidewire 17 (step (c) in FIG. 4).

To complete the assembly of endoprosthesis 1, a second peripheral arterial access is then made at the contralateral common femoral artery (not visible). Through the second peripheral arterial access, a second guidewire 34, similar to the first guidewire 17, is introduced.

In step (d) of the EVAR procedure, the second guidewire 34 is advanced through the contralateral common femoral artery, the contralateral iliac artery 20 and the aneurysm A to the supra-renal aortic region 22 in a manner entirely similar to that described above with reference to the first guidewire -for example, with the aid of one or more guiding catheters such as those illustrated in FIG. 6. The free stents 13 of the main module 6 extend by radial force and adhere to the supra-renal aortic region 22.

Also in this case, the sequential use of one or more intermediate, low-stiffness second guidewires, lastly replaced by a final, more rigid second guidewire, for convenience all equally designated by the expression "second guidewire 34".

At this stage, the second guidewire 34 must be correctly routed into the terminal opening or gate 11 of the contralateral portion 9 of the main module 6 by performing the so-called cannulation manoeuvre of the gate 11.

In following step (e) of the procedure, the contralateral module 10 (FIG. 1) of the endoprosthesis 1 attached to a second release catheter (not shown) and held in a compacted form by a second sheath (not shown in the figure), is advanced along the second guidewire 34 until the proximal end of the contralateral module 10 enters the terminal opening 11 of the contralateral portion 9 of the main module 6, defining a region of overlap 36 between the contralateral portion 9 of the main module 6 and the contralateral module 10 of the endoprosthesis 1.

The second sheath is then withdrawn, dragging it out of the second peripheral access, and the contralateral module 9 automatically expands under the radial force of the stents 4 (FIG. 1), causing the distal end of the contralateral module 10 to adhere to the vessel wall, as well as the adhesion between the contralateral portion 9 and the contralateral module 10 at the overlap region 36. Expansion and sealing is further aided by the operation of an additional advanced balloon on the second guidewire 34(step (f) in FIG. 4). The expansion of the lateral leg 8 can be completed at this stage, for example by reintervening with the balloon associated with the first guidewire 17.

Lastly in step (g), once the expansion of the endoprosthesis 1 in all its sections is complete, the first guidewire 17 and the second guidewire 34 are removed by pulling them from their respective peripheral arterial accesses. Once it is fully assembled and expanded so that it adheres firmly to the vessel wall, the endoprosthesis 1 excludes the aneurysm A from the circulation.

The EVAR procedure is performed under fluoroscopic control in order to visualize in real time the conformation of the vessels, marked with appropriate contrast media, and the position of guidewires, guiding catheters and endoprosthesis 1 modules during introduction and advancement.

Grafting of the endoprostheses 2 and 3 shown in FIGURES 2 and 3 is performed through endovascular procedures commonly referred to as Branched-EVAR (B-EVAR) and Fenestrated-EVAR (F-EVAR) similar to the EVAR procedure described above, *mutatis mutandis.*

Such procedures involve the introduction of the main module 6 on guidewires through an initial peripheral arterial access and expansion once the implant site has been reached, and the insertion of further prosthetic modules (e.g. additional branches to be inserted into the fenestrations 16 of the endoprosthesis 3) through additional guidewires inserted from the same peripheral access or from further accesses. It is common, in this type of procedure, to provide a peripheral access from above, in the axilla, as an alternative or in addition to the femoral access from below.

Performing endovascular surgical procedures requires a high degree of manual skill on the part of the surgeon.

The most delicate manoeuvres are the insertion of guidewires and guiding catheters. The vascular network to be traversed, starting from the peripheral percutaneous access to the aneurysmal site, can in fact be very long and intricate and present considerable anatomical differences from one patient to another.

Furthermore, guidewires and guiding catheters must be manoeuvred from outside the percutaneous access and oriented in three-dimensional space solely on the basis of what the surgeon can infer from the two-dimensional images offered by the fluoroscope. The correct orientation of guidewires and guiding catheters is therefore entirely left to the manual sensitivity of the surgeon and his ability to interpret the radiological images in real time.

Traditionally, the bulk of the training for this type of procedure takes place in field trials. Since during actual surgeries the most complex situations are often the preserve of the most experienced surgeons, this training mode severely limits the actual possibilities for young surgeons to increase their manual skills.

Artificial models of vascular tracts are known in the industry and are used for study or surgical training purposes.

For example, there are three-dimensional models of aneurysmal sections of the abdominal aorta connected to the two iliac arteries and other vessels. Such models are used in simulations of endovascular surgery in which conditions are reproduced as closely as possible to those of the actual surgery, including viewing through fluoroscopic guidance.

The Applicant noted that these models are usually custom-made, and are therefore rather complex and expensive to produce. Such models are also not very versatile for training purposes, as they allow only a specific anatomical configuration to be exercised.

The Applicant also realized that, in addition to reproducing the entire procedure, it would be advantageous for the surgeon to be able to test the technical gestures requiring more skill in isolation, without the need to set up a simulation of an overall surgery.

The Applicant noted in particular that the most complex technical gestures, for which more practice would be required, are the so-called cannulation manoeuvres, intended to aim and centering with the guidewire, possibly in cooperation with a guiding catheter, a particularly small opening arranged within a larger space.

For example, in the EVAR procedure described above, it is not easy to introduce the end of the second guidewire 34 into the terminal opening **11 of** the contralateral portion 9 of the main module 6 of the endoprosthesis 1 (step (d)). Similarly, in a B-EVAR or F-EVAR procedure it is particularly complex to correctly direct a guidewire to introduce it into the branches 15 of the endoprosthesis 2 or into the fenestrations 16 of the endoprosthesis 3 of FIG. 1.

The Applicant has therefore set itself the goal of providing a surgical training device with a simple and inexpensive construction, which allows a plurality of operative configurations of endovascular components and/or anatomical configurations to be simulated in an endovascular treatment procedure, e.g. in a procedure similar to an EVAR, B-EVAR or F-EVAR.

The Applicant also perceived that it would be advantageous to be able to switch smoothly and quickly from one "simulated" operative configuration of components to another, or from one "simulated" anatomical configuration to another, so that many different surgical manoeuvres could be tested with a single device and to become familiar with the more complex technical gestures of a typical endovascular procedure in a short time.

The Applicant further set itself the goal of providing a method of surgical training in which such a device is used.

The present invention therefore relates, in a first aspect thereof, to a training device for a surgical procedure of endovascular treatment of an aneurysm.

The device comprises a container having a wall defining a confined chamber, and a first access opening in said wall.

The first access opening is configured to allow the insertion into the container of a guidewire and/or guiding catheter for endovascular surgery.

The device comprises a first tube connected to said container at the first access opening.

Advantageously, the device also comprises a movable element comprising a target and a control member connected to said target.

The target of the movable element is arranged within the container and comprises at least one cannulation site configured to receive said guidewire and/or said guiding catheter for endovascular surgery.

The control member of the movable element protrudes at least partially out of the container through a control opening of the container wall.

The movable element is movably constrained, at the control opening, to the wall of the container, so as to enable the target to adopt a plurality of different positions and/or orientations within the container.

In this description and the attached claims, "confined chamber" refers to a space within the container surrounded on all sides by the wall of the container, and substantially enclosed apart from openings made in delimited regions of said wall.

In this description and the attached claims, the terms "proximal", "distal", "lateral" and "contralateral" are used in accordance with their usual meaning in the medical field.

In particular, the terms "proximal" and "distal" when used with reference to anatomical portions of the cardiovascular system indicate districts closer to, respectively further away from, the heart. These terms also take on a similar meaning when used with reference to artificial components that simulate, or are implanted at, anatomical portions of the cardiovascular system.

The terms "lateral" and "contralateral" are understood in their usual meaning in the medical field. In particular, when used in connection with anatomical structures or artificial devices simulating anatomical structures, the term "lateral" denotes a structure located in an -actual or hypothetical- reference body half, and the term "contralateral" denotes a structure located in a half opposite said reference body half.

In the present description and the attached claims, "median plane of the container" refers to a plane that substantially cuts the container in half. When the container has an ovoid shape, said plane is orthogonal to a longitudinal direction of the container.

in the present description and attached claims, "longitudinal direction" of a given element refers to its direction of maximum development.

In this description and the attached claims, "cannulation", "cannulate" and similar expressions refer to any endovascular manoeuvre aimed at inserting a guidewire or guiding catheter for endovascular surgery into an opening of a particularly small size compared to the surrounding space in which the guidewire or catheter can be moved.

The Applicant has verified that by arranging a confined container with a target having at least one cannulation site within it, it is possible to effectively simulate a situation in which it is necessary to aim and center a small opening of an endoprosthesis -for example, the gate 11 of endoprosthesis 1 in FIG. 1 or a fenestration 16 of the endoprosthesis 3- with a surgical guidewire or guiding catheter without the need to construct a complete model of the surgical situation.

Furthermore, the Applicant has found that since such a target is supported on a movable element, movably constrained to the wall of the container, it is possible to change the position and/or orientation of the target within the container, so that a plurality of simulated surgical situations are available in which a surgeon can test his manual skills.

The Applicant has also verified that by equipping the movable element with a control member that protrudes at least partially from the container, it is possible to change the position and orientation of the target quickly and easily by acting from outside the container, possibly even during the same surgical training session.

Thanks to the device provided by the Applicant, a trainee surgeon has the opportunity to be exposed to a large number of complex surgical situations and to test a large number of endovascular manoeuvres using the same device, which is also very inexpensive, simply by manually changing the target configuration.

In a second aspect, the present invention also concerns a training method for an endovascular surgical procedure of treatment of an aneurysm.

It is envisaged to provide a training device according to the first aspect of the present invention.

It is envisaged to provide a guidewire for endovascular surgery and/or a guiding catheter for endovascular surgery.

It is further envisaged to introduce said guidewire, or said guiding catheter, or said guidewire introduced in said guiding catheter, into the container of the device through said first tube and said first access opening.

It is further envisaged to attempt to direct a terminal end of the guidewire and/or an ending of the guiding catheter towards the at least one cannulation site of the target of the movable element and possibly to introduce said terminal end of the guidewire end and/or said ending of the guiding catheter into said at least one cannulation site of the target.

The Applicant has found that the training method according to the invention is quick and easy to perform and allows for an effective exercise of real-life-like operating situations, as well as presenting essentially no risks for the operator or others.

The device according to the present invention may comprise one or more of the following preferred features, considered individually or in combination.

Preferably, said container has a spherical or ovoid shape.

Preferably, wall of the container is made of flexible or soft material.

In this way, the container is able to effectively simulate the structural features of an actual aneurysm, and its walls bend when contacted by the guidewire and/or the guiding catheter during insertion.

Preferably, the wall of said container is made of a translucent or transparent material.

The transparency of the container allows the operator conducting a training session to view the progress status of the guidewire / guiding catheter and the position of the target within the container directly on the device, in case he is unable to correctly interpret the spatial configuration of the system from fluoroscopic images alone. This allows the operator to obtain direct visual feedback, and to quickly implement the necessary corrections in the event of an error or highly difficult manoeuvre.

For example, the wall of the container is made of silicone material.

Preferably, the at least one cannulation site of the target is made of radiopaque material.

More preferably, the target is made of radiopaque material.

Even more preferably, the movable element is made of radiopaque material.

By making the at least one cannulation site of radiopaque material, it is possible to monitor its position under fluoroscopic control and thus conduct a training session under viewing conditions similar to those of an actual surgery.

Preferably, the movable element is made of metallic material.

Preferably, said at least one cannulation site is selected from one or more cavities, one or more concave regions, one or more recesses or one or more through holes in said target.

Preferably, said target is a ring and said at least one cannulation site is a through hole of said ring.

This embodiment is capable of simulating in a simple manner any cannulation manoeuvre. It is particularly suitable, for example, for simulating the cannulation of an endoprosthesis 3 (FIG. 3) at its fenestration 16 in an F-EVAR procedure.

Alternatively, said target is a segment of a tubular endovascular prosthesis, and said at least one cannulation site comprises a through hole of said segment of tubular endovascular prosthesis.

Preferably, said target is selected from a bifurcated endoprosthetic segment, a branched endoprosthetic segment, a fenestrated endoprosthetic segment or combinations thereof.

Preferably, said at least one cannulation site is selected from a passage lumen of a tubular endoprosthetic segment, a passage lumen of a tubular endoprosthetic branch, and a fenestration made in an endoprosthetic wall.

In embodiments, said target comprises a plurality of cannulation sites.

Preferably, said target segment of endovascular tubular prosthesis is at least partly transparent.

The transparency of the endoprosthetic segment advantageously allows to visually follow the position of the guidewire and/or of the guiding catheter during routing towards the target and insertion into the one or more cannulation sites, embodied by the passage lumens of the tubular portions, of any ramifications and/or any fenestrations.

Preferably, the control opening is an elongated cut or slit in said wall.

Preferably, said cut or said slit comprises flexible edge flaps.

This feature allows the movable element to be easily inserted into/from the container, for example to replace it with another movable element supporting a different target, especially when the target is of non-negligible size (for example, when the target is a tubular endoprosthesis segment).

Preferably, the control member of the movable element comprises an outer portion that protrudes out of the container through the control opening.

This outer portion of the control member can be grasped from outside the container by an operator, and allows the position and/or orientation of the movable element to be manoeuvred.

Preferably, the control member comprises an inner portion, arranged within the container.

Preferably, the movable element is movably constrained to the wall of the container at this control opening.

Preferably, the movable element is kept reversibly constrained to the container wall by the friction of said flexible edge flaps of the cut or slit on the control member.

Preferably, the position of the movable element in relation to the container can be changed by applying a force to the control member that is greater than the frictional force between the edge flaps of said cut or slit and the control member.

Preferably, said control member is rigidly fixed to the target or is made as one piece with the target.

In this way, any movement imposed on the control member is rigidly transmitted to the target, and the position and orientation of the target within the container can be precisely controlled.

Preferably, the control member is an elongated arm.

Preferably, said device comprises a second access opening in said wall.

In such case, the device preferably comprises a second tube connected to said container at said second access opening.

Preferably, the first and second access openings are arranged on the same side of the device with respect to a median plane thereof.

Preferably, said device comprises a third access opening in said wall.

In such case, the device preferably comprises a second tube connected to said container at said second access opening.

Preferably, the third access opening and the first or second access opening are arranged on opposite sides of the device with respect to its median plane.

In particularly preferred embodiments, the container further comprises a plurality of additional openings distributed along said wall, configured to allow passage of said guidewire and/or guiding catheter for endovascular surgery.

The presence of said additional apertures further enriches the variety of simulated configurations available to the operator during training, as the additional apertures serve as additional cannulation sites for testing the routing of the guiding wire and/or of the guiding catheter.

Preferably, said container has a length, parallel to a longitudinal direction of the device, comprised between about 5 cm and about 20 cm, preferably between about 7 cm and about 15 cm.

Preferably, said container has a width, orthogonal to a longitudinal direction of the device, comprised between about 3 cm and about 18 cm, preferably between approximately 5 cm and approximately 13 cm.

Preferably, said first access opening and/or said second access opening are circular.

Preferably, one or more of the first access opening, the second access opening and the third access opening have a passage diameter comprised between about 4 mm and about 2 cm, preferably between about 6 mm and about 1.5 cm.

Preferably, said at least one cannulation site comprises a circular through hole having a diameter comprised between about 2 mm and about 2 cm, preferably between about 4 mm and about 1.5 cm, even more preferably between about 3 mm and about 8 mm.

Preferably, said additional openings in the container wall are circular, each having a diameter comprised between about 2 mm and about 2 cm, preferably between about 4 mm and about 1.5 cm, even more preferably between approximately 3 mm and approximately 8 mm.

In particularly preferred embodiments, said device further includes a tank.

The tank preferably comprises a perimeter wall of such a height as to contain a fluid column capable of completely covering the container of the device when immersed in the tank.

Preferably, said tank comprises, at said perimeter wall, one or more holes for the passage of the first tube and preferably of the second tube and/or the third tube of the device, where provided.

The provision of such a tank allows a fluid to be introduced into the container, thus more closely simulating the operating conditions of the endovascular procedure. By keeping the container submerged in the tank, the container remains filled with fluid even if some of such fluid exits the inner chamber through the control opening or, where present, through additional openings in the wall.

Preferably, recirculation tubes connected to the first tube and/or the second tube, and to the third tube, are provided to allow continuous circulation of a fluid within the container, so as to simulate a dynamic condition comparable to blood circulation during the *in vivo* procedure.

Preferably, in the training method according to the invention, the attempt to route the terminal end of the guidewire and/or the ending of the guiding catheter is conducted by moving the guidewire and/or the guiding catheter forward or backward relative to the container by sliding it through the first access opening.

Alternatively or additionally, the attempt to route the terminal end of the guidewire and/or the ending of the guiding catheter is conducted by rotating the guidewire and/or catheter around a respective longitudinal axis.

Alternatively or additionally, the attempt to route the terminal end of the guidewire and/or the ending of the guiding catheter is conducted by sliding the guidewire and/or guiding catheter longitudinally relative to each other.

Preferably, according to the training method of the invention it is envisaged to change the position and/or orientation of the target with respect to the container by manually acting on the control member.

Further features and advantages of the present invention will best result from the following detailed description of some preferred embodiments thereof, made with reference to the accompanying drawings. The different features in the individual configurations may be combined at will. In these drawings,
- Figs. 1-3 are schematic perspective views of vascular endoprostheses according to the prior art and already described in detail above;
- FIG. 4 is a schematic representation of the main steps of a known surgical procedure, already described in detail above;
- FIG. 5 illustrates a guidewire, already described in detail, which can be used in the surgical procedure of FIG. 4 and in the training method according to the present invention;
- FIG. 6 illustrates some guiding catheters, already described in detail, which can be used in the surgical procedure of FIG. 4 and in the training method according to the present invention;
- FIGS. 7-8 illustrate a device in accordance with a first embodiment of the invention, in different operating configurations;
- FIG. 9 illustrates a device in accordance with a second embodiment of the invention;
- FIG. 10 illustrates a device in accordance with a third embodiment of the invention;
- FIG. **11** illustrates the device of FIGS. 7-8 in an operating step of the surgical training method according to the invention; and
- FIG. 12 illustrates a device in accordance with a fourth embodiment of the invention.

The representations in the accompanying figures are not necessarily intended to be to scale and do not necessarily respect the proportions of the various parts.

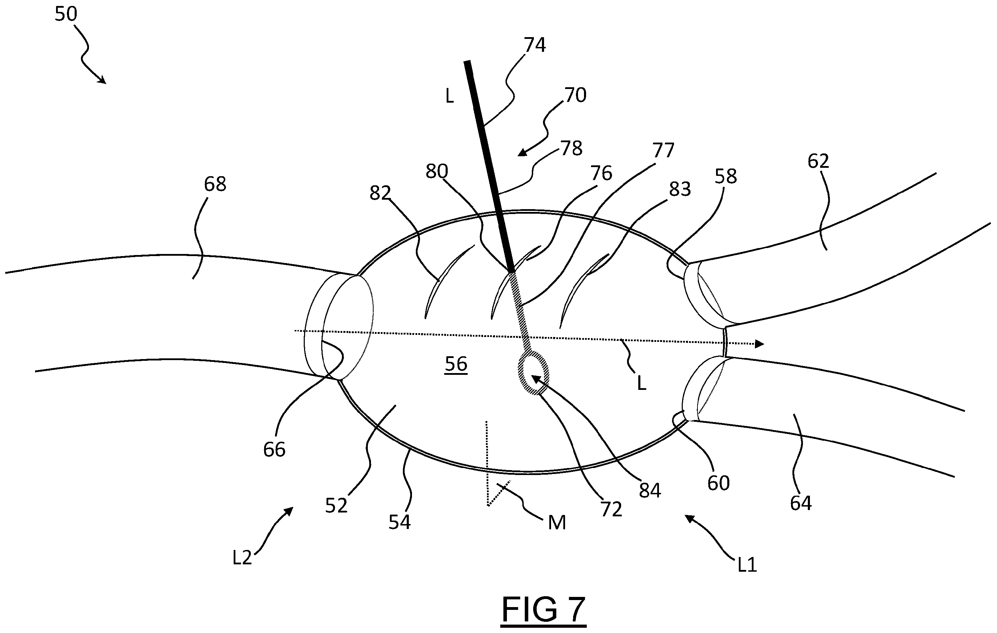

With reference to FIGS. 7-8, a first preferred embodiment of a surgical training device according to the invention, indicated by reference 50, is now described.

Device 50 comprises a rounded, for example ovoid container 52 as in the illustrated case.

The container 52 is formed by a substantially closed wall 54, apart from openings which will be described below, defining a confined chamber 56 within it.

A longitudinal direction, along which a length of the container 52 is defined, and a median plane M (schematically shown in FIG. 7) orthogonal to the longitudinal direction L are identified in FIG. 7.

The wall 54 of the container 52 is made of a soft, translucent or transparent material, for example a silicone material, and allows the components that may be arranged in the chamber 56 to be seen or at least discerned.

The container 52 is conformed, geometrically and structurally, to simulate an aneurysmal region of a blood vessel, for example an A aneurysm located in the abdominal aortic subrenal region (FIG. 4).

Container 52 comprises a first access opening 58 and a second circular access opening 60, arranged on a first side L1 of device 50 with respect to the median plane M.

A first tube 62 and a second tube 64 are respectively connected, in fluid connection, to the container 52 at said first access openings 58 and second access openings 60.

The first and second tubes 62, 64 are configured to simulate, for example, the lateral and contralateral iliac arteries 18, 20 connected to the aneurysm A (FIG. 4).

The container 52 preferably comprises a third access opening 66, arranged on a second side L2 opposite the first side L1 of the device 50 with respect to the median plane M, and a third tube 68 connected, in fluid connection, to the container 52 at said third access opening 66.

The third tube 68 simulates, for example, the portion of the abdominal aorta upstream of the aneurysm A (FIG. 4).

The Device 50 advantageously comprises a movable element 70.

The movable element 70 comprises a target 72 and a control member 74, for example in the form of an elongated and substantially straight arm.

The control member 74 is rigidly fixed to the target 72. Thus, any movement manually imposed on the control member 74 is rigidly transmitted to the target 72.

Target 72 is located completely within the confined chamber 56 inside container 52.

The control member 74 protrudes at least partially from the container 52 through a first control opening 76, resulting in the presence of an outer portion 78 of the control member 74 graspable from outside the container 52, and an inner portion 77 of the control member 74 attached to the target 72.

The first control opening 76 is in the form of an elongated cut having flexible edge flaps (not shown in the figure) which, by creating friction on the portion 80 of the control member 74 in contact with them, keep the movable element 70 constrained to the wall 54 of the container 52.

In this way, the movable element 70 is substantially pivoted between the edge flaps of the first control opening 76. By manoeuvring the outer portion 78 of the control member 74, it is possible to change the position of the inner portion 77 of the control member 74 and consequently to variously move and orient the target 72 within the inner chamber 56 of the container 52.

By pulling or pushing the control member 74 along it is possible, for example, to insert it deeper into the container 52 or to pull it further out of the container 52, bringing the target 72 closer to or further away from the first control opening 76. By tilting the control member 74 it is possible to impose a corresponding tilt on the target 72. By rotating the control member 74 about its axis, it is possible to change the orientation of the target 72.

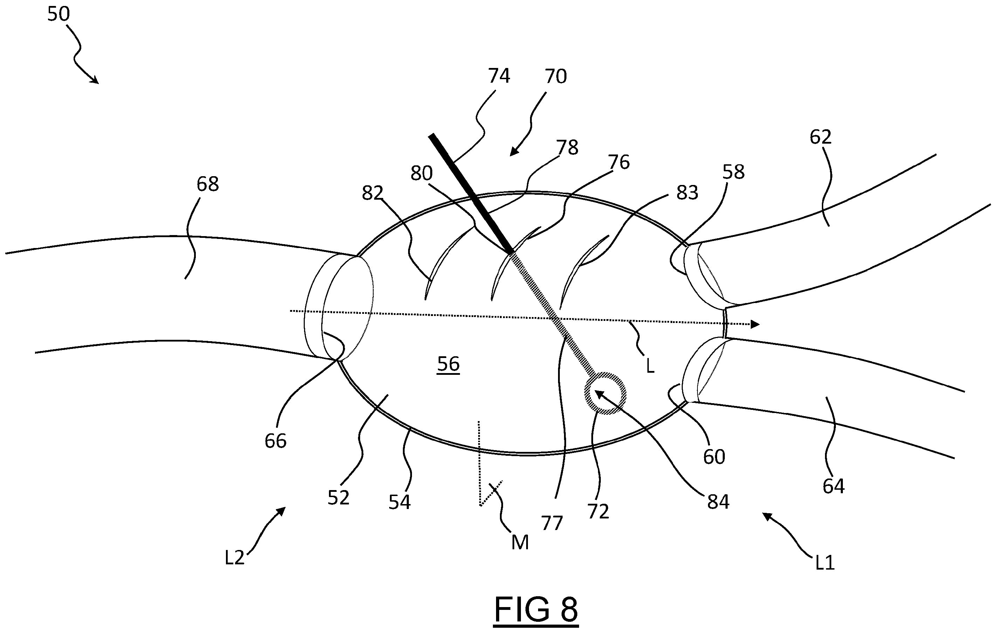

FIG. 8 shows, for example, the device 50 with the movable element 70 whose position and orientation with respect to the container 52 have been modified with respect to the case shown in FIG. 7, by manually acting on the outer portion 78 of the control member 74.

Returning to FIG. 7, the first control opening 76 is for example arranged parallel to the median plane M of the device 50, but can be positioned and oriented differently on the container 52. Further control openings 82, 83, for example arranged parallel to the first control opening 76, can be provided, as in the illustrated case, to be used in case it is preferred or necessary to pivot the movable element 70 at a different location on the container 52.

The target 72 of the device 50 is in the form of a ring, rigidly constrained to the inner portion 77 of the control member 74, and comprises a cannulation seat 84 represented by its central circular hole.

The cannulation site 84 is sized to receive a guidewire and/or a guiding catheter of the type commonly used in an endovascular surgical procedure, such as those exemplarily illustrated in Figures 5-6.

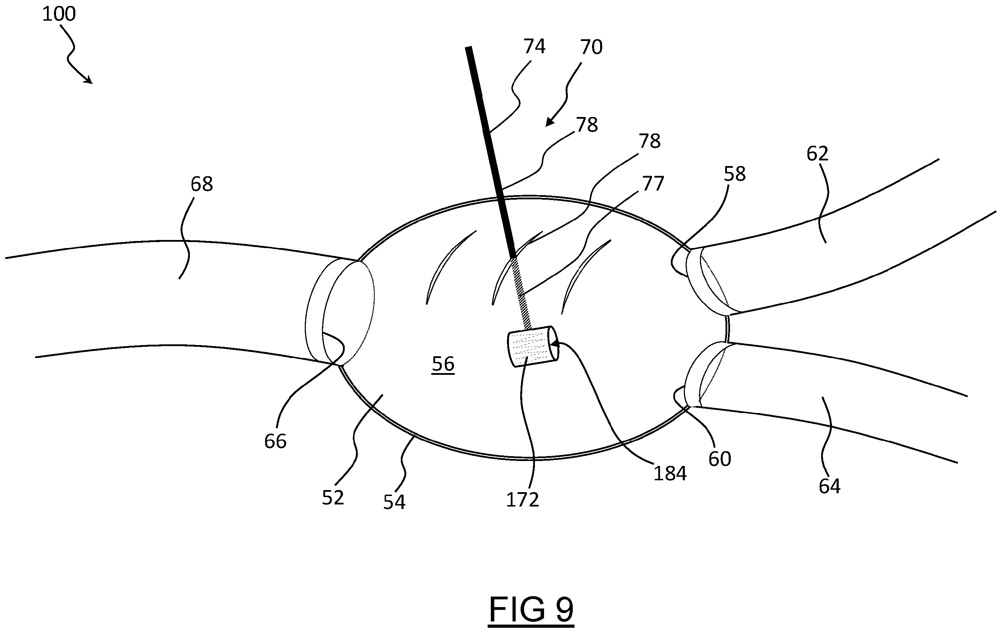

FIG. 9 illustrates a device 100 according to a different embodiment of the invention.

The device 100 differs from the device 50 of FIGS. 7-8 only in that the target 172 is made from a tubular endoprosthesis segment, which is structurally analogous to the endoprostheses 1-3 illustrated in FIGS. 1-3. The cannulation site 184 is in this case represented by the passage lumen of the target 172.

In this case, the control member 74 is preferably fixed rigidly at the tubular wall 86 of the target 172.

The target 172 illustrated here is a "simple" tubular endoprosthesis segment.

In other embodiments not illustrated herein, the target 172 may comprise endoprosthetic segments of any type and also of articulated conformation. For example, the target 172 may comprise a bifurcated (analogous to the endoprosthesis 1 of FIG. 1), branched (analogous to the endoprosthesis 2 of FIG. 1) or fenestrated (analogous to the endoprosthesis 3 of FIG. 1) endoprosthesis segment.

Preferably, the endoprosthetic segment forming the target 172 is transparent so that the position of the guidewire or guiding catheter can be visually followed during insertion into the target 172.

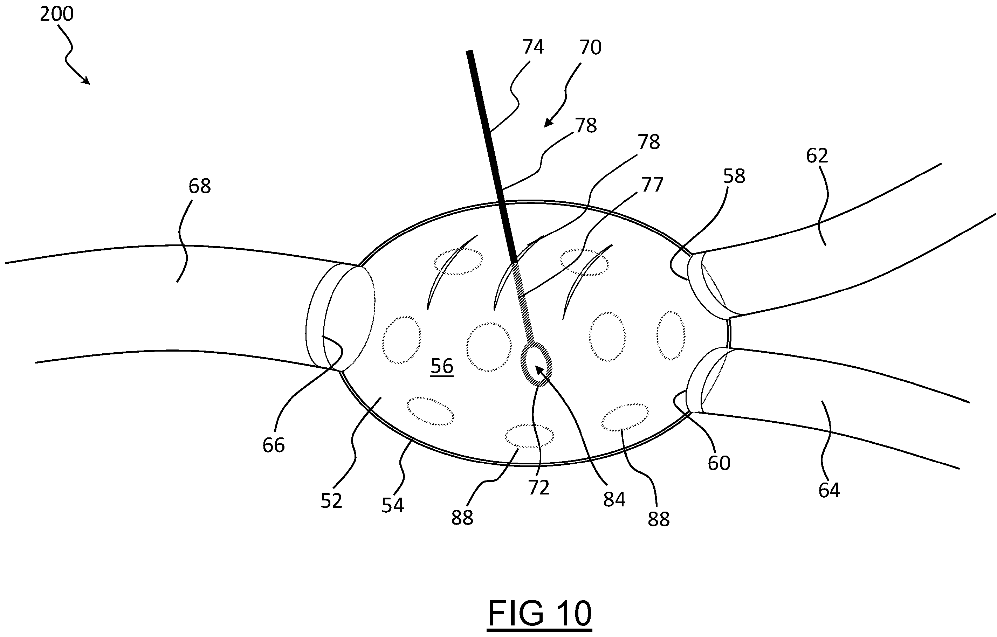

FIG. 10 illustrates a device 200 according to a further embodiment of the invention. The device 200 differs from the device 50 of FIGS. 7-8 only in that it comprises a plurality of additional apertures 88, variously located on the wall 54 of the container 52.

Such additional openings 88 are circular and are sized to allow passage of a guidewire or of a guiding catheter for endovascular surgery, similar, for example, to those illustrated in FIGGs. 5-6.

In other non-illustrated embodiments, tubular branches, for example tubular endoprosthetic segments or stent segments, may be provided, exiting the additional openings 88 so as to increase the complexity and number of sites to which the guidewire or guiding catheter may be directed during training.

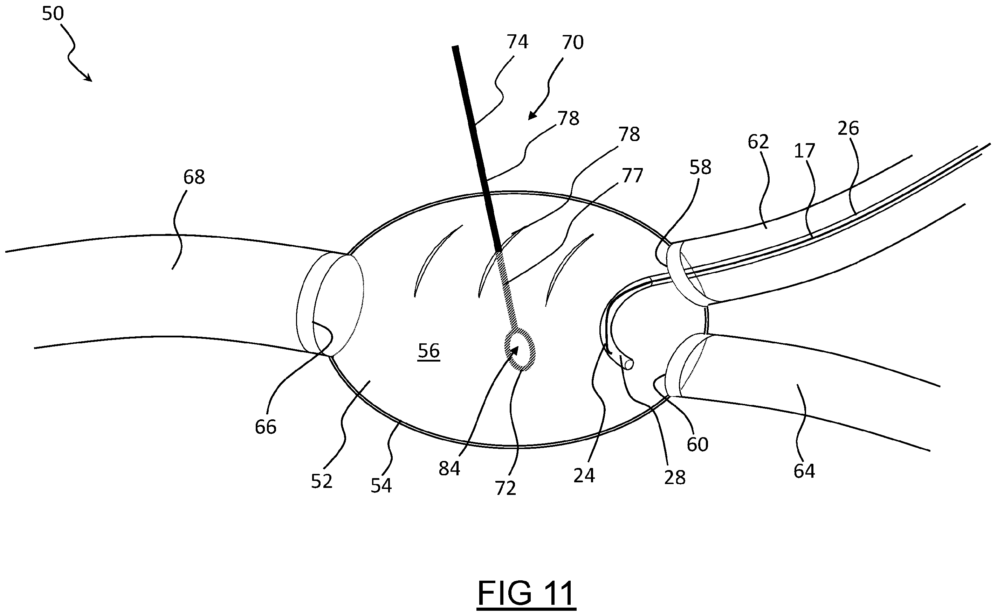

With reference to FIG. 11, a training method for a surgical procedure for endovascular treatment of an aneurysm according to the present invention is now briefly illustrated.

In a training device according to one of the described embodiments, for example the training device 50 illustrated again herein, the movable element 70 is initially manoeuvred by manually acting on the control member 74 so as to make the target 72 assume the desired position and orientation within the confined chamber 56.

A guidewire 17, in the case shown operatively associated with a guiding catheter 26, is then inserted through the first tube 62 and the first opening 58, until access is gained to the inner chamber 56 of the container 52. In this way, the introduction of the guiding wire 17 and the guiding catheter 26 into the iliac artery is simulated until the aneurysmal region is reached in an EVAR procedure.

By manoeuvring the guidewire 17 and the guiding catheter 26 peripherally with respect to each other and with respect to the container 52, the operator can practice directing the terminal end 24 of the guidewire 17 and/or the ending of the guiding catheter 26 towards and into the cannulation site 84 of the target 72, simulating a cannulation manoeuvre of an endovascular procedure of the EVAR, or B-EVAR / F-EVAR type.

Between trials, the operator has the option of changing the position and orientation of the target 72 in the confined chamber 56 to his liking, to simulate a different operating configuration.

If, instead of the device 50 illustrated herein, the device 200 of FIG. 10 is used, in addition to attempting to center the target 72 the operator has the option to practice routing the terminal end 24 of the guidewire 17 and/or the ending of the guiding catheter 26 from within the confined chamber 56 to the outside of the container 52 through one or more of the additional apertures 88, thereby expanding his or her training options.

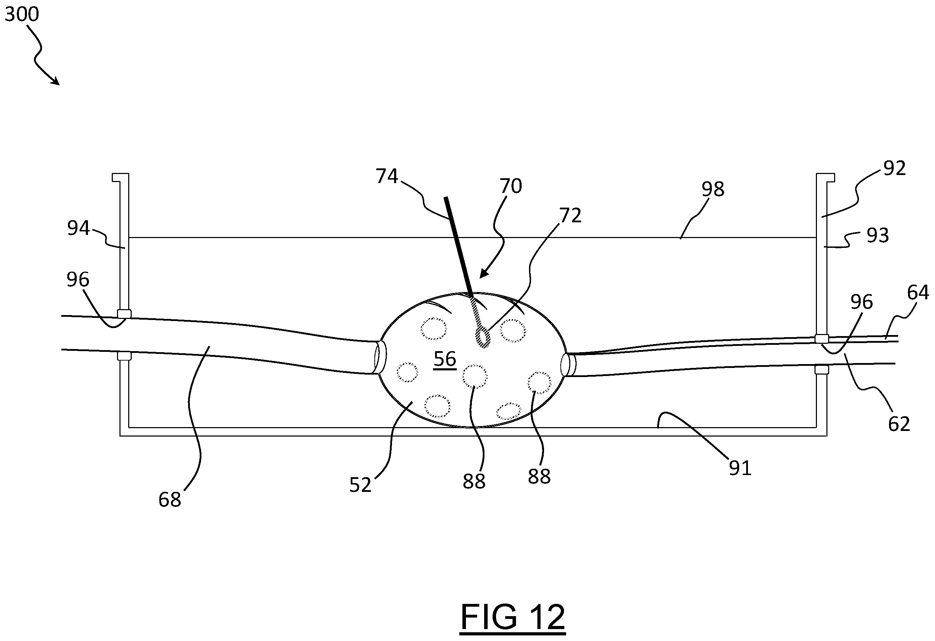

FIG. 12 illustrates a device 300 according to a further embodiment in accordance with the invention.

The device 300 differs from the device 200 illustrated in FIG. 10 in that it further comprises a tank 90, illustrated herein in a rectangular shape.

The tank 90 includes a perimeter wall 92, of which only two sides 93, 94 are illustrated for the sake of clarity, in order to allow a view of the components arranged within the tank 90.

The container 52 lies on the bottom 91 of the tank 90. The perimeter wall 92 of the tank includes holes 96, at its sides 93, 94, which allow the passage of the first and second tubes 62, 64 and the third tube 68 of the device 200. The holes 96 are hermetically sealed around the first tube 62, the second tube 64 and the third tube 68 by means of suitable gaskets.

The provision of the tank 90 allows the device to be operated and the cannulation manoeuvres to be tested, in the manner described above, even in the presence of a fluid -for example water or other denser fluids- in order to better simulate real operating conditions.

In use, the device 200 is in fact completely submerged by the fluid and filled with fluid. The free surface 98 of the fluid is above the first and second tubes 62, 64 and the third tube 68 of the device 200.

It is possible to envisage, in this embodiment, a recirculation system that allows the fluid to continuously circulate in the inlet to the container 52, for example through the third tube 68, and out of the container 52, for example through the first and second tubes 62, 64, so as to simulate a dynamic fluidic situation.

In order to meet specific requirements, a skilled person in the art may make numerous changes and variations to the illustrated and described devices 50, 100, 200 and 300 and to the related training method, all of which are contained within the scope of protection of the present invention as defined by the following claims.

## Claims

1. Training device (50, 100, 200, 300) for a surgical procedure of endovascular treatment of an aneurysm, comprising:
- a container (52) having a wall (54) defining a confined chamber (56) and a first access opening (58) in said wall (54), said first access opening (58) being configured to allow the insertion into the container (52) of a guidewire (17) and/or of a guiding catheter (26) for endovascular surgery,
- a first tube (62) connected to said container (52) at said first access opening (58), and
- a movable element (70) comprising a target (72, 172) and a control member (74) connected to said target (72, 172),
wherein said target (72, 172) is arranged within the container (52) and comprises at least one cannulation site (84, 184) configured to receive said guidewire (17) and/or said guiding catheter (26) for endovascular surgery, and said control member (74) at least partially protrudes out of the container (52) through a control opening (76, 82, 83) of the wall (54) of the container (52), and
wherein said movable element (70) is movably constrained, at said control opening (76, 82, 83), to the wall (54) of the container (52) so as to enable the target (72, 172) to adopt a plurality of different positions and/or orientations within the container (52).

2. Training device (50, 100, 200, 300) according to claim 1, wherein said container (52) has a spherical or ovoid shape.

3. Training device (50, 100, 200, 300) according to claim 1 or 2, wherein the wall (54) of said container (52) is made of a translucent or transparent material.

4. Training device (50, 100, 200, 300) according to any one of the preceding claims, wherein one or more of the at least one cannulation site (84, 184), the target (72, 172) and the movable element (70) is made of a radiopaque, preferably metallic, material.

5. Training device (50, 100, 200, 300) according to any one of the preceding claims, wherein the at least one cannulation site (84, 184) is sectioned among one or more cavities, one or more concave regions, one or more recesses or one or more through holes in said target (72, 172).

6. Training device (50, 100, 200, 300) according to any one of the preceding claims, wherein the control opening (76, 82, 83) is an elongated cut or slit in the wall (54) of the container (52), said cut or said slit comprising flexible edge flaps, and wherein the movable element (70) is kept reversibly constrained to the wall (54) of the container (52) by a friction of said flexible edge flaps of said cut or of said slit onto the control member (74).

7. Training device (50, 100, 200, 300) according to any one of the preceding claims, wherein the control member (74) of the movable element (70) is rigidly fixed to the target (72, 172) or is made as one piece with the target (72, 172).

8. Training element (50, 100, 200, 300) according to any one of the preceding claims, wherein the container (52) comprises a plurality of additional openings (88) distributed on said wall (54), configured to enable the passage of said guidewire (17) and/or guiding catheter (26) for endovascular surgery.

9. Training device (50, 100, 200, 300) according to any one of the preceding claims, further comprising a tank (90) having a perimeter wall (92) with a height such as to contain a fluid column capable of completely covering said container (52) of the device (50, 100, 200, 300) arranged in immersion in said tank (90).

10. Training method for a surgical procedure of endovascular treatment of aneurysms, comprising:
- providing a training device (50, 100, 200, 300) according to any one of the preceding claims;
- providing a guidewire (17) for endovascular surgery and/or a guiding catheter (26) for endovascular surgery;
- introducing said guidewire (17), or said guiding catheter (26), or said guidewire (17) introduced in said guiding catheter (26), into the container (52) of the device (50, 100, 200, 300) through said first tube (62) and said access opening (58);
- attempting to direct a terminal end of the guidewire (17) and/or an ending of the guiding catheter (26) towards the cannulation site (84, 184) of the target (72, 172) of the movable element (70); and
- optionally introducing said terminal end of the guidewire (17) and/or said ending of the guiding catheter into the cannulation site (84, 184) of the target (72, 172).

11. Use of a training device (50, 100, 200, 300) according to any one of claims 1-9 in a training method according to claim 10.

## Patentansprüche

1. Trainingsvorrichtung (50, 100, 200, 300) für ein chirurgisches Verfahren zur endovaskulären Behandlung eines Aneurysmas, umfassend:
- einen Behälter (52) mit einer Wand (54), die eine begrenzte Kammer (56) definiert, und erste Zugangsöffnung (58) in der Wand (54), wobei die erste Zugangsöffnung (58) konfiguriert, um das Einführen eines Führungsdrahtes (17) und/oder eines Führungskatheters (26) für die endovaskuläre Chirurgie in den Behälter (52) zu ermöglichen,
- ein erstes Rohr (62), das mit dem Behälter (52) an der ersten Zugangsöffnung (58) verbunden ist, und
- ein bewegliches Element (70), umfassend ein Ziel (72, 172) und ein Steuerelement (74) mit dem Ziel (72, 172) verbunden,
wobei das Ziel (72, 172) innerhalb des Behälters (52) angeordnet ist und mindestens eine Kanülierungsstelle (84, 184) umfasst, die zur Aufnahme des Führungsdrahtes (17) und/oder des Führungskatheters (26) für die endovaskuläre Chirurgie konfiguriert ist, und das Steuerelement (74) ragt zumindest teilweise aus dem Behälter (52) heraus durch eine Steueröffnung (76, 82, 83) der Wand (54) des Behälters (52) und wobei das bewegliche Element (70) an der Steueröffnung (76, 82, 83) beweglich an der Wand (54) des Behälters (52) befestigt ist, um dem Ziel (72, 172) zu ermöglichen, eine Vielzahl unterschiedlicher Positionen und/oder Ausrichtungen einzunehmen innerhalb des Behälters (52).

2. Trainingsvorrichtung (50, 100, 200, 300) nach Anspruch 1, wobei der Behälter (52) eine kugelförmige oder ovale Form aufweist.

3. Trainingsvorrichtung (50, 100, 200, 300) nach Anspruch 1 oder 2, wobei die Wand (54) des Behälters (52) aus einem lichtdurchlässigen oder transparenten Material besteht.

4. Trainingsvorrichtung (50, 100, 200, 300) nach einem der vorhergehenden Ansprüche, wobei eine oder mehrere der mindestens einen Kanülierungsstelle (84, 184), das Ziel (72, 172) und das bewegliche Element (70) aus einem röntgendichten, vorzugsweise metallischen Material bestehen.

5. Trainingsvorrichtung (50, 100, 200, 300) nach einem der vorhergehenden Ansprüche, wobei die mindestens eine Kanülierungsstelle (84, 184) in einen oder mehrere Hohlräume, einen oder mehrere konkave Bereiche, eine oder mehrere Aussparungen oder ein oder mehrere Durchgangslöcher in dem Ziel (72, 172) unterteilt ist.

6. Trainingsvorrichtung (50, 100, 200, 300) nach einem der vorhergehenden Ansprüche, wobei die Steueröffnung (76, 82, 83) ein länglicher Schnitt oder Schlitz in der Wand (54) des Behälters (52) ist, wobei der Schnitt oder Schlitz flexible Randklappen umfasst, und wobei das bewegliche Element (70) durch eine Reibung der flexiblen Randklappen des Behälters (52) reversibel an der Wand (54) des Behälters (52) gehalten wird Schnitt oder des Schlitzes am Steuerelement (74).

7. Trainingsvorrichtung (50, 100, 200, 300) nach einem der vorhergehenden Ansprüche, wobei das Steuerelement (74) des beweglichen Elements (70) starr am Ziel (72, 172) befestigt ist oder einstückig mit dem Ziel (72, 172) ausgebildet ist.

8. Schulungselement (50, 100, 200, 300) nach einem der vorhergehenden Ansprüche, wobei der Behälter (52) eine Vielzahl zusätzlicher Öffnungen aufweist (88) an der Wand (54) verteilt, konfiguriert, um den Durchgang des Führungsdrahtes (17) und/oder des Führungskatheters (26) für die endovaskuläre Chirurgie zu ermöglichen.

9. Trainingsvorrichtung (50, 100, 200, 300) nach einem der vorhergehenden Ansprüche, ferner umfassend einen Tank (90) mit einer Umfangswand (92) mit einer Höhe so dass eine Flüssigkeitssäule enthalten ist, die den Behälter vollständig bedecken kann (52) der Vorrichtung (50, 100, 200, 300), die in besagtem Tank (90) eingetaucht angeordnet ist.

10. Trainingsverfahren für ein chirurgisches Verfahren zur endovaskulären Behandlung von Aneurysmen, umfassend:
- Bereitstellung einer Trainingsvorrichtung (50, 100, 200, 300) gemäß einem der vorhergehenden Ansprüche;
- Bereitstellung eines Führungsdrahtes (17) für die endovaskuläre Chirurgie und/oder eines Führungskatheters (26) für die endovaskuläre Chirurgie;
- Einführen des Führungsdrahtes (17) oder des Führungskatheters (26) oder des in den Führungskatheter (26) eingeführten Führungsdrahtes (17) in den Behälter (52) der Vorrichtung (50, 100, 200, 300) durch den ersten Schlauch (62) und den Zugang Öffnung (58);
- den Versuch, ein terminales Ende des Führungsdrahtes (17) und/oder ein Ende des Führungskatheters (26) in Richtung der Kanülierungsstelle (84, 184) des Ziels (72, 172) des beweglichen Elements (70) zu führen; und
- gegebenenfalls Einführen des genannten Endes des Führungsdrahtes (17) und/oder des genannten Endes des Führungskatheters in die Kanülierungsstelle (84, 184) des Ziels (72, 172).

11. Verwendung einer Trainingsvorrichtung (50, 100, 200, 300) nach einem der Ansprüche 1 bis 9 in einem Trainingsverfahren nach Anspruch 10.

## Revendications

1. Dispositif d'entraînement (50, 100, 200, 300) pour une procédure chirurgicale de traitement endovasculaire d'un anévrisme, comprenant :
- un récipient (52) présentant une paroi (54) délimitant une chambre confinée (56) et une première ouverture d'accès (58) dans ladite paroi (54), ladite première ouverture d'accès (58) étant configurée pour permettre l'insertion dans le conteneur (52) d'un fil-guide (17) et/ou d'un cathéter de guidage (26) pour la chirurgie endovasculaire,
- un premier tube (62) relié audit récipient (52) au niveau de ladite première ouverture d'accès (58), et
- un élément mobile (70) comprenant une cible (72, 172) et un organe de commande (74) relié à ladite cible (72, 172), dans lequel ladite cible (72, 172) est disposée à l'intérieur du conteneur (52) et comprend au moins un site de canulation (84, 184) configuré pour recevoir ledit fil-guide (17) et/ou ledit cathéter de
guidage (26) pour la chirurgie endovasculaire, et ledit organe de commande (74) fait saillie au moins partiellement hors du conteneur (52) par une ouverture de contrôle (76, 82, 83) de la paroi (54) du conteneur (52), et dans lequel ledit élément mobile (70) est contraint de manière mobile, au niveau de ladite ouverture de commande (76, 82, 83), à la paroi (54) du conteneur (52) de manière à permettre cible (72, 172) pour adopter une pluralité de positions et/ou d'orientations différentes à l'intérieur du conteneur (52).

2. Dispositif d'entraînement (50, 100, 200, 300) selon la revendication 1, dans lequel ledit conteneur (52) présente une forme sphérique ou ovoïde.

3. Dispositif d'entraînement (50, 100, 200, 300) selon la revendication 1 ou 2, dans lequel le La paroi (54) dudit récipient (52) est constituée d'un matériau translucide ou transparent.

4. Dispositif d'entraînement (50, 100, 200, 300) selon l'une quelconque des revendications précédentes, dans lequel un ou plusieurs parmi au moins un site de canulation (84, 184), la cible (72, 172) et l'élément mobile (70) sont constitués d'un matériau radio-opaque, de préférence métallique.

5. Dispositif d'entraînement (50, 100, 200, 300) selon l'une quelconque des revendications précédentes, dans lequel au moins un site de canulation (84, 184) est sectionné parmi une ou plusieurs cavités, une ou plusieurs régions concaves, un ou plusieurs évidements ou un ou plusieurs trous traversants dans ladite cible (72, 172).

6. Dispositif d'entraînement (50, 100, 200, 300) selon l'une quelconque des revendications précédentes revendications, dans lesquelles l'ouverture de contrôle (76, 82, 83) est une découpe ou une fente allongée dans la paroi (54) du conteneur (52), ladite découpe ou ladite fente comprenant des rabats de bord flexibles, et dans lesquelles l'élément mobile (70) est maintenu de manière réversible contraint à la paroi (54) du conteneur (52) par un frottement desdits rabats de bord flexibles de ladite découpe ou de ladite fente sur l'organe de commande (74).

7. Dispositif d'entraînement (50, 100, 200, 300) selon l'une quelconque des revendications précédentes, dans lequel l'organe de commande (74) de l'élément mobile (70) est fixé rigidement à la cible (72, 172) ou est réalisé d'une seule pièce avec la cible (72, 172).

8. Élément d'entraînement (50, 100, 200, 300) selon l'une quelconque des revendications précédentes revendications, dans lesquelles le conteneur (52) comprend une pluralité d'ouvertures supplémentaires (88) réparties sur ladite paroi (54), configurées pour permettre le passage dudit fil-guide (17) et/ou dudit cathéter-guide (26) pour la chirurgie endovasculaire.

9. Dispositif d'entraînement (50, 100, 200, 300) selon l'une quelconque des revendications précédentes, comprenant en outre un réservoir (90) présentant une paroi périphérique (92) d'une hauteurde manière à contenir une colonne de fluide capable de recouvrir entièrement ledit récipient (52) du dispositif (50, 100, 200, 300) disposé en immersion dans ledit réservoir (90).

10. Procédé d'entraînement pour une procédure chirurgicale de traitement endovasculaire des anévrismes, comprenant:
- fournir un dispositif d'entraînement (50, 100, 200, 300) selon l'une quelconque des revendications précédentes ;
- fournir un fil-guide (17) pour la chirurgie endovasculaire et/ou un cathéter-guide (26) pour la chirurgie endovasculaire ;
- introduire ledit fil-guide (17), ou ledit cathéter de guidage (26), ou ledit fil-guide (17) introduit dans ledit cathéter de guidage (26), dans le récipient (52) du dispositif (50, 100, 200, 300) à travers ledit premier tube (62) et ledit accès ouverture (58) ;
- tenter de diriger une extrémité terminale du fil-guide (17) et/ou une extrémité du cathéter de guidage (26) vers le site de canulation (84, 184) de la cible (72, 172) de l'élément mobile (70) ; et
- éventuellement introduire ladite extrémité terminale du fil-guide (17) et/ou ladite l'extrémité du cathéter de guidage dans le site de canulation (84, 184) de la cible (72, 172).

11. Utilisation d'un dispositif d'entraînement (50, 100, 200, 300) selon l'une quelconque des revendications 1 à 9 dans un procédé d'entraînement selon la revendication 10
